# EUROPEAN PATENT APPLICATION

(11) **EP 1 014 461 A2**
(43) Date of publication of application: **28.06.2000**
(21) Application number: 99125569.6
(22) Date of filing: 21.12.1999
(51) Int. Cl.: H01M 4/52, C01G 53/04, C01G 53/00, C01G 51/00

(54) **Positive electrode material and secondary battery using the same**

(30) Priority: 24.12.1998 JP 36626098
(71) Applicant: SONY CORPORATION, Tokyo (JP)
(72) Inventor: Yamaura, Kiyoshi, c/o Sony Corporation, Tokyo (JP)
(74) Representative: MÜLLER & HOFFMANN Patentanwälte

(57) **Abstract**

A positive electrode material capable of achieving high charge and discharge efficiency and a secondary battery using the positive electrode material. The positive electrode material contains a Li·Ni composite oxide or a Li·Ni·Co composite oxide. Each of the composite oxides has a characteristic that a reduction wave in a current-potential curve obtained by cyclic voltammetry does not have a current peak in a range where the potential is larger than 3.4V and smaller than 3.6V with a Li metal potential used as a reference. The Li·Ni composite oxide has a mole ratio of Ni to Li (Ni/Li) larger than 1.0 and is therefore non-stoichiometric. Thus, in the positive electrode made of the positive electrode material, occurrence of a distortion in a charging and discharging process is suppressed, polarization does not become large even at the last stage of the discharge, and a high charge and discharge efficiency can be achieved.

## Description

### BACKGROUND OF THE INVENTION

### 1. Field of the Invention

The present invention relates to a positive electrode material containing a composite oxide of lithium (Li) and nickel (Ni) or a positive electrode material containing a composite oxide of lithium, nickel and cobalt (Co), and a secondary battery using such materials.

### 2. Description of the Related Art

In recent years, as electronic technology progresses, small portable electronic devices typified by camcorder (video cassette recorder), portable telephone and laptop computer have been being developed. As a portable power source for use in each of those devices, therefore, development of a small and light secondary battery having high energy density is strongly demanded.

Conventionally, secondary batteries such as nickel-cadmium secondary battery, lead accumulator, lithium ion secondary battery, and the like are widely known. Especially, attention is given to lithium ion secondary batteries which can realize a high output and high energy density and, recently, some of them are commercially available by active study and development.

Lithium ion secondary batteries utilize a nonaqueous liquid electrolyte obtained by dissolving lithium salt such as lithium hexafluorophosphate (LiPF₆) into a nonaqueous solvent such as propylene carbonate or diethyl carbonate, since lithium is highly reactive to water. In some cases, lithium ion secondary batteries may have negative electrodes made of metal lithium or lithium alloy. But recently, a carbonaceous material capable of occluding and releasing lithium ions, in which dendrite (dendrite crystal) is not formed even when charging and discharging are repeated, is often employed.

On the other hand, the positive electrodes have been made of metal sulfide or metal oxide which does not contain lithium, such as TiS₂, MoS₂, NbSe₂ or V₂O₅. Recently, however, a composite oxide of lithium and nickel which are capable of achieving higher energy density as compared with the above-named materials and can be produced at lower cost is often used.

Secondary batteries using a composite oxide of lithium and nickel for the positive electrode, however, have problems of the low charge and discharge efficiency as a ratio of the discharge capacity to the charge capacity and the lower energy density at the time of discharge than the theoretical energy density (Solid State Ionics, 109 (1998), p.295; H. Arai et al).

### SUMMARY OF THE INVENTION

The invention has been achieved in consideration of the problems. An object of the invention is to provide a positive electrode material capable of achieving high charge and discharge efficiency and a secondary battery using the material.

A positive electrode material according to the invention contains a composite oxide of lithium and nickel. The composite oxide has a characteristic that a reduction wave in a current-potential curve obtained by cyclic voltammetry does not have a current peak in a range where a potential is larger than 3.4V and smaller than 3.6V with a lithium metal potential used as a reference.

Another positive electrode material according to invention contains composite oxide of lithium, nickel and cobalt having a mole ratio of cobalt to nickel and cobalt (Co/(Ni+Co)) larger than. 0.0 and smaller than 0.15. The composite oxide has a characteristic that a reduction wave in a current-potential curve obtained by cyclic voltammetry does not have a current peak in a range where a potential is larger than 3.4V and smaller than 3.6V with a lithium metal potential used as a reference.

Still another positive electrode material contains a composite oxide of lithium and nickel, the composite oxide having a mole ratio of nickel to lithium (Ni/Li) larger than 1.0.

A secondary battery according to the invention comprises a positive electrode and a negative electrode, and an electrolyte, the positive electrode containing a composite oxide of lithium and nickel. The composite oxide has a characteristic that a reduction wave in a current-potential curve obtained by cyclic voltammetry does not have a current peak in a range where a potential is larger than 3.4V and smaller than 3.6V with a lithium metal potential used as a reference.

Another secondary battery according to the invention comprises a positive electrode and a negative electrode, and an electrolyte, the positive electrode containing a composite oxide of lithium, nickel and cobalt. The composite oxide has a mole ratio of cobalt to both nickel and cobalt (Co/(Ni+Co)) larger than 0.0 and smaller than 0.15. The composite oxide has a characteristic that a reduction wave in a current-potential curve obtained by cyclic voltammetry does not have a current peak in a range where a potential is larger than 3.4V and smaller than 3.6V with a lithium metal potential used as a reference.

Still another secondary battery according to the invention comprises a positive electrode and a negative electrode, and an electrolyte, the positive electrode containing a composite oxide of lithium and nickel. The composite oxide has a mole ratio of nickel to lithium (Ni/Li) larger than 1.0.

A positive electrode material according to the invention contains a composite oxide of lithium and nickel. The composite oxide has a characteristic that the reduction wave in the current-potential curve obtained by cyclic voltammetry does not have a current peak in a range where the potential is larger than 3.4V and smaller than 3.6V with the lithium metal potential used as a reference. Thus, the positive electrode having high charge and discharge efficiency can be obtained.

Another positive electrode material according to the invention contains a composite oxide of lithium, nickel and cobalt. The composite oxide has a characteristic that the reduction wave in the current-potential curve obtained by cyclic voltammetry does not have a current peak in a range where the potential is larger than 3.4V and smaller than 3.6V with the lithium metal potential used as a reference. Thereby, the positive electrode having high charge and discharge efficiency can be obtained.

Still another positive electrode material according to the invention contains the composite oxide of lithium and nickel. The composite oxide has the mole ratio of nickel to lithium (Ni/Li) larger than 1.0. Thus, the positive electrode having high charge and discharge efficiency can be obtained.

A secondary battery according to the invention is charged when lithium ions are released from the positive electrode and moved from the positive electrode to the negative electrode via the electrolyte. The secondary battery is discharged when the lithium ions are moved from the negative electrode to the positive electrode via the electrolyte and occluded by the positive electrode. Since the positive electrode contains a composite oxide similar to the positive electrode material of the invention, the secondary battery has high charge and discharge efficiency.

Other and further objects, features and advantages of the invention will appear more fully from the following description.

### BRIEF DESCRIPTION OF THE DRAWINGS

Fig. 1 is a cross section showing the configuration of a secondary battery using a positive electrode material according to an embodiment of the invention.
Fig. 2 is a cyclic voltamgram of a secondary battery according to Example 1 of the invention.
Fig. 3 is a cyclic voltamgram of a secondary battery according to Comparative Example 1.
Fig. 4 is a cyclic voltamgram of a secondary battery according to Comparative Example 2.
Fig. 5 is a cyclic voltamgram of a secondary battery according to Example 2 of the invention.
Fig. 6 is a cyclic voltamgram of a secondary battery according to Comparative Example 3.

### DETAILED DESCRIPTION OF THE PREFERRED EMBODIMENTS

Embodiments will be described in detail hereinbelow with reference to the drawings.

### First Embodiment

A positive electrode material according to a first embodiment of the invention is used for, for example, a positive electrode of a secondary battery. The positive electrode material contains mainly a composite oxide of lithium and nickel (hereinbelow, called lithium nickel composite oxide). A characteristic of the lithium nickel composite oxide is that a reduction wave in a current-potential curve obtained by cyclic voltammetry does not have a current peak in a range where the potential is larger than 3.4V and smaller than 3.6V with the lithium metal potential used as a reference. The current-potential curve (that is, cyclic voltamgram) is obtained by oxidizing the lithium nickel composite oxide until the potential becomes 4.5V by using the lithium metal potential as a reference at the scanning speed of 0.01 mV/sec and, after that, reducing it until the potential becomes 3.0V by using the lithium metal potential as a reference at the scanning speed of 0.01 mV/sec.

Generally, a lithium nickel composite oxide having a stoichiometric composition corresponds to a composition expression as shown by Chemical Formula (1):

LiNiO₂ (1)

In the lithium nickel composite oxide, the mole ratio of nickel to lithium (Ni/Li) (hereinbelow, referred to as mole ratio Ni/Li) is larger than 1.0 as the stoichiometric composition. That is, the lithium nickel composite oxide is non-stoichiometric with respect to the mole ratio of nickel to lithium and accordingly has defects.

With such a composition, the lithium nickel composite oxide has the characteristic of being able to increase the charge and discharge efficiency when used for the positive electrode of a secondary battery. The reason can be given as follows. For example, if a lithium nickel composite oxide having the mole ratio Ni/Li of approximately 1.0 as the stoichiometric composition is used for the positive electrode of a secondary battery, the crystal system changes in the charging/discharging process (that is, process of oxidation/reduction) and several kinds of structural phase transitions occur. Since the transition is accompanied by discontinuous changes in the lattice volume, a crack or an inactive area occurs in the crystal of the lithium nickel composite oxide due to the transition. As a result, diffusion of lithium is disturbed by distortion at the last stage of discharge. Polarization becomes so large that high charge and discharge efficiency cannot be obtained.

In contrast, in the lithium nickel composite oxide having the mole ratio Ni/Li larger than 1.0, the defect introduced therein works as a "wedge" against the structural phase transition, with the result that the transition does not easily occur in the charge and discharge process. Especially, the transition from a hexagonal system to a monoclinic system is diminished. Therefore, polarization does not become large even at the last stage of the discharge. A discharge capacity appropriate to a charge capacity, that is, high charge and discharge efficiency can be obtained.

The mole ratio Ni/Li is preferably not too large, or else a rock-salt structure becomes stable and the capacity decreases. Specifically, it is preferable that the mole ratio Ni/Li is smaller than 1.1/0.9.

The positive electrode material having such a composition can be produced by using, for example, a lithium compound and a nickel compound as materials. Specifically, a lithium compound and a nickel compound are weighted so that a desired mole ratio of lithium to nickel can be obtained. The compounds are sufficiently mixed, heated and sintered at temperatures of 600 to 1000 ° C in an atmosphere containing oxygen. Thereby, the positive electrode material is obtained. As a lithium compound, carbonate, sulfate, nitrate, oxide, hydroxide or halide of lithium is used. As a nickel compound, similarly, carbonate, sulfate, nitrate, oxide, hydroxide or halide of nickel is used. As a specific example of the lithium compound, lithium hydroxide hydrate (LiOH·H₂O) can be mentioned. As a specific example of the nickel compound, nickel oxide (NiO) can be mentioned.

The positive electrode material produced as mentioned above is used for, for example, the positive electrode of a secondary battery as described below.

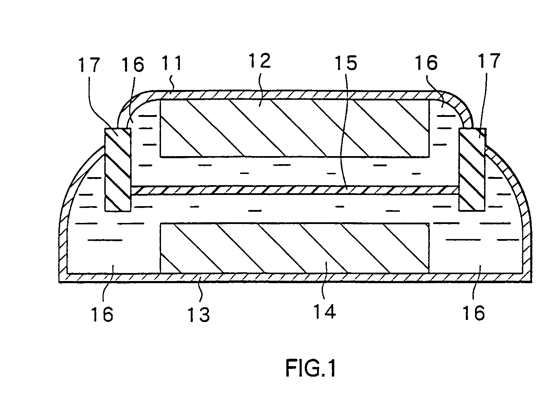

Fig. 1 shows the structure in cross section of a secondary battery having the positive electrode made of the positive electrode material according to the embodiment. The secondary battery is of what is called a coin type. The secondary battery is obtained by stacking a disc-shaped positive electrode 12 housed in an armor cup 11 and a disc-shaped negative electrode 14 housed in an armor can 13 with a separator 15 in between. The armor cup 11 and the armor can 13 are filled with a liquid electrolyte 16 as a liquid type electrolyte. The peripheral parts of the armor cup 11 and the armor can 13 are caulked with an insulating gasket 17 in between, and thus hermetically sealed.

Each of the armor cup 11 and the armor can 13 is made of a metal such as stainless steel or aluminium. The armor cup 11 functions as a collector of the positive electrode 12 and the armor can 13 functions as a collector of the negative electrode 14.

The positive electrode 12 contains, for example, a positive electrode material according to the embodiment as a positive electrode active material. The positive electrode 12 is made of the positive electrode material together with a conductive agent such as carbon black or graphite and a binder such as polyvinylidene fluoride. That is, the positive electrode 12 contains the lithium nickel composite oxide having the above-mentioned composition. The positive electrode 12 is fabricated through, for example, preparing a positive electrode mixture by mixing a positive electrode material, a conductive agent and a binder and, after that, compression molding the positive electrode mixture in a pellet form. The positive electrode 12 may be also fabricated through preparing a positive electrode mixture by mixing a solvent such as formamide or N-methylpyrrolidone in addition to a positive electrode material, a conductive agent and a binder and, after that, drying the positive electrode mixture, and then compression molding the dried mixture. In these cases, the positive electrode material may be used either as it is or in the dried state. Preferably, the positive electrode material is used in the sufficiently dried state. This is because the positive electrode material reacts with water and loses the function as a positive electrode material, when the positive electrode material comes into contact with water.

The negative electrode 14 contains, for example, a material capable of occluding and releasing lithium metal, lithium alloy or lithium. As a material capable of occluding and releasing lithium, for example, there are a conductive polymer and a carbonaceous material. The carbonaceous material is more preferable since its energy density per unit volume is higher. As a conductive polymer, polyacetylene, polypyrrole, or the like is used. As carbonaceous materials, there are pyrolytic carbon materials, cokes such as pitch coke, needle coke, and petroleum coke, artificial graphite materials, natural graphite materials, carbon black such as acetylene black, vitrified carbon materials, calcined organic high polymer, carbon fiber, active carbon, and the like. A calcined organic high polymer is obtained by burning an organic high polymer material such as phenol resin or furan resin at a proper temperature of 500 ° C or higher in an inert gas current or in vacuum.

When the negative electrode 14 contains a carbonaceous material, the negative electrode 14 is made of a carbonaceous material together with a binder such as polyvinylidene fluoride. In this case, the negative electrode 14 is fabricated through, for example, preparing a negative electrode mixture by mixing a carbonaceous material with a binder and, after that, compression molding the negative electrode mixture in a pellet form. The negative electrode 14 may be also fabricated through preparing a negative electrode mixture by mixing a solvent such as formamide or N-methylpyrrolidone in addition to a carbonaceous material and a binder and, after that, drying the negative electrode mixture, and then compression molding the dried negative electrode mixture.

The separator 15 separates the positive electrode 12 and the negative electrode 14 from each other and allows lithium ions to pass while preventing a current short circuit due to the contact between the positive and negative electrodes. The separator 15 takes the form of, for example, nonwoven cloth made of polytetrafluoroethylene, polypropylene, polyethylene or the like, ceramics film, or porous film.

The liquid electrolyte 16 is obtained by dissolving lithium salt into an organic solvent. The liquid electrolyte 16 exhibits ion conductivity when the lithium salt is ionized. As lithium salt, LiPf₆, LiClO₄, LiAsF₆, LiBF₄, LiCF₃SO₃, Li(CF₃SO₂)₂ and the like are appropriate. A mixture of two or more kinds of them may be also used.

As organic solvents, propylene carbonate, ethylene carbonate, butylene carbonate, vinylene carbonate, γ-butyrolactone, sulfolane, 1,2-dimethoxyethane, 1,2-diethoxyethane, 2-methyltetrahydrofuran, 3-methyl-1,3-dioxolane, propionic acid methyl, butyric acid methyl, dimethyl carbonate, diethyl carbonate, dipropyl carbonate, and the like are appropriate. A mixture of two or more kinds of them may be also used. Among them, cyclic carbonate such as propylene carbonate or vinylene carbonate and chain carbonate such as dimethyl carbonate, diethyl carbonate or dipropyl carbonate are electrochemically stable and thus preferable as organic solvents.

The secondary battery having such a configuration acts as follows.

When the secondary battery is charged, lithium ions are released from the lithium nickel composite oxide which forms the positive electrode 12. The lithium ions pass through the separator 15 via the liquid electrolyte 16, and are occluded by the negative electrode 14. After that, when the secondary battery is discharged, for example, in the case of using a carbonaceous material for the negative electrode 14, lithium ions are released from the negative electrode 14. The lithium ions pass through the separator 15 via the liquid electrolyte 16, are returned to the positive electrode 12, and are occluded by the lithium nickel composite oxide. In this case, the reduction wave with respect to the current-potential curve obtained by cyclic voltammetry of the lithium nickel composite oxide which forms the positive electrode 12 does not have a current peak in a range where the potential is larger than 3.4 V and smaller than 3.6V with the lithium metal potential used as a reference. Also, the mole ratio Ni/Li of the lithium nickel composite oxide is larger than 1.0. The positive electrode 12 is not therefore largely polarized even at the last stage of the discharge, but has the discharge capacity appropriate to the charge capacity and displays high charge and discharge efficiency.

As described above, the positive electrode material of the embodiment contains the lithium nickel composite oxide which has a characteristic that the reduction wave in the current-potential curve obtained by cyclic voltammetry does not have a current peak in a range where the potential is larger than 3.4V and smaller than 3.6V with the lithium metal potential used as a reference. By using the positive electrode material for the positive electrode of a secondary battery, a secondary battery having high charge and discharge efficiency can be obtained.

Also, the positive electrode material of the embodiment contains the lithium nickel composite oxide having the mole ratio Ni/Li larger than 1.0. By using the positive electrode material for the positive electrode of a secondary battery, a secondary battery having high charge and discharge efficiency can be obtained.

Further, by using the positive electrode material which contains the lithium nickel composite oxide having the mole ratio Ni/Li smaller than 1.1/0.9, the capacity of the positive electrode can be increased.

### Second Embodiment

A positive electrode material according to a second embodiment of the invention contains mainly a composite oxide of lithium, nickel and cobalt (hereinbelow, referred to as lithium nickel cobalt composite oxide). The positive electrode material is used for, for example, the positive electrode of a secondary battery in a manner similar to the first embodiment. Generally, a lithium nickel cobalt composite oxide having a stoichiometric composition corresponds to a composition expression as shown by Chemical Formula (2):

LiNi_{1-y}Co_{y}O₂ (2)

Preferably, the composite oxide contains cobalt so that the mole ratio of cobalt to both nickel and cobalt (Co/(Ni+Co)) (hereinbelow, called mole ratio Co/(Ni+Co)) is larger than 0.0 and smaller than 0.15. That is, in chemical formula (2), it is preferable that y is larger than 0.0 and smaller than 0.15. This is because the charging/discharging capacity of a secondary battery decreases as the cobalt content of the composite oxide increases when the composite oxide is used for the positive electrode of a secondary battery. In other words, it is preferable that the cobalt content of the composite oxide is smaller in order to obtain the larger charge and discharge capacity with respect to the secondary battery. More preferably, the composite oxide contains cobalt so that the mole ratio Co/(Ni + Co) is 0.1 or lower.

A characteristic of the lithium nickel composite oxide is that the reduction wave in the current-potential curve obtained by cyclic voltammetry does not have a current peak in a range where the potential is larger than 3.4V and smaller than 3.6V with the lithium metal potential used as a reference. The current-potential curve is obtained, for example, under measurement conditions similar to those of the first embodiment. The lithium nickel cobalt composite oxide therefore has the characteristic of being able to increase the charge and discharge efficiency of a secondary battery when used for the positive electrode of a secondary battery.

The reason can be given as follows. Generally, unlike the lithium nickel composite oxide having the stoichiometric composition, a lithium nickel cobalt composite oxide does not exhibit large polarization when used for the positive electrode of a secondary battery even at the last stage of discharge as the cobalt content of the composite oxide increases. This characteristic is clear especially when the content of cobalt is at the mole ratio Co/(Ni + Co) of 0.15 or larger. This is because the density of trivalent nickel ions which cause a distortion by the Jahn-Teller effect is lowered by cobalt ions having no Jahn-Teller effect as the content of cobalt increases, thereby the distortion at the last stage of discharge is reduced. The diffusion of lithium is not therefore disturbed by the distortion. Large polarization is not found either even at the last stage of discharge. Such a characteristic, however, cannot be sufficiently obtained when the content of cobalt is at the mole ratio Co/(Ni + Co) smaller than 0.15.

On the other hand, even in the case of lithium nickel cobalt composite oxide having the mole ratio Co/(Ni+Co) smaller than 0.15, some defect is introduced therein if the composite oxide has a characteristic that the reduction wave in the current-potential curve obtained by cyclic voltammetry does not have a current peak in a range where the potential is larger than 3.4V and smaller than 3.6V with the lithium metal potential used as a reference. Occurrence of a distortion is suppressed by the defect introduced therein, as in the first embodiment. The defect introduced therein does not have to be a defect of a degree at which the mole ratio of lithium, nickel and cobalt is recognized to be non-stoichiometric, but some defect. Therefore, polarization does not become large even at the last stage of discharge. The high charge and discharge efficiency can be thus obtained.

The positive electrode material having such a composition can be produced by using, for example, a lithium compound, a nickel compound, and a cobalt compound as materials in a manner similar to the first embodiment. In this case, as a cobalt compound, carbonate, sulfate, nitrate, oxide, hydroxide, halogenide, or the like of cobalt can be used. As a specific example of the cobalt compound, a cobalt oxide (Co₃O₄) can be mentioned.

To be specific, the positive electrode material fabricated as mentioned above is used for the positive electrode of a secondary battery in a manner similar to the first embodiment (refer to Fig. 1). The secondary battery has the same configuration as that of the first embodiment except that the positive electrode material according to the second embodiment is used for the positive electrode. Therefore, detailed description thereof with reference to Fig. 1 is omitted.

The secondary battery acts in a manner similar to the first embodiment. Specifically, when the secondary battery is charged, lithium ions are released from the lithium nickel cobalt composite oxide which forms the positive electrode 12 and moved to the negative electrode 14. When the secondary battery is discharged, lithium ions are moved from the negative electrode 14 to the positive electrode 12 and occluded by the lithium nickel cobalt composite oxide which forms the positive electrode 12. The lithium nickel cobalt composite oxide which forms the positive electrode 12 has a characteristic that the reduction wave in the current-potential curve obtained by cyclic voltammetry does not have a current peak in a range where the potential is larger than 3.4 V and smaller than 3.6V with the lithium metal potential used as a reference. The positive electrode 12 therefore is not largely polarized even at the last stage of discharge but displays high charge and discharge efficiency.

As described above, the positive electrode material of the embodiment contains the lithium nickel cobalt composite oxide having the mole ratio Co/(Ni+Co) smaller than 0.15. Further, the composite oxide has a characteristic that the reduction wave in the current-potential curve obtained by cyclic voltammetry does not have a current peak in a range where the potential is larger than 3.4V and smaller than 3.6V with the lithium metal potential used as a reference. By using the positive electrode material for the positive electrode of a secondary battery, a secondary battery having large charge and discharge capacity and high charge and discharge efficiency can be obtained. Thus, decrease in energy density can be suppressed.

### Examples

Specific examples of the invention will now be described in detail.

### Example 1

A lithium hydroxide hydrate of purity higher than 99.0% and a nickel oxide of purity higher than 99.5% were prepared and mixed so that the mole ratio between lithium and nickel becomes Li:Ni = 1.0 : 1.0. The mixture was then heated at 800 ° C for six hours in mixture gas reflux comprised of argon (Ar) gas of 5 percent by volume and oxygen (O₂) gas of 95 percent by volume. By the operation, black powders containing mainly a lithium nickel composite oxide were obtained as a positive electrode material.

The composition of the obtained lithium nickel composite oxide was analyzed by powder X-ray diffraction. For calculation of the composition, the calculation program RIETAN-97 for Rietveld-analysis was used. The result is shown in Table 1. As understood from Table 1, the mole ratio between lithium and nickel in the obtained lithium nickel composite oxide was Li:Ni = 0.96 : 1.04. It was found that the lithium nickel composite oxide was non-stoichiometric with respect to the mole ratio between lithium and nickel and that the mole ratio Ni:Li was larger than 1.0 as the stoichiometric composition and smaller than 1.1/0.9.

**Table 1**

| | Mole ratio of Li to Ni Li : Ni | Charge and discharge efficiency (%) | Discharge energy density (mWh/g) |
|---|---|---|---|
| Example 1 | 0.96 : 1.04 | 94 | 790 |
| Comparative Example 1 | 1.00 : 1.00 | 81 | 740 |
| Comparative Example 2 | 0.89 : 1.11 | 92 | 456 |

Subsequently, a positive electrode was fabricated by using the obtained positive electrode material and then a secondary battery was made by using the positive electrode. Specifically, to 90 parts by weight of the obtained positive electrode material, 7 parts by weight of graphite as a conductive agent and 3 parts by weight of polyvinylidene fluoride as a binder were added and, after that, dimethyl formamide as a solvent was added and mixed, thereby preparing a positive electrode mixture. After that, the positive electrode mixture was sufficiently dried until dimethyl formamide was completely volatilized. Approximately 60 mg of the positive electrode mixture was measured and pressure-molded in a disc shape having the surface area of approximately 2 cm², thereby fabricating a positive electrode.

After fabricating the positive electrode, by using the positive electrode, a negative electrode obtained by stamping a lithium metal into a disc shape, a liquid electrolyte obtained by dissolving lithium hexafluorophosphate (LiPF₆) into propylene carbonate and a separator which takes the form of a porous film made of polypropylene, a coin-type secondary battery similar to the secondary battery shown in Fig. 1 was fabricated. The amount of lithium used in the example is adjusted to be hundreds times of the maximum charging capacity of the positive electrode so as not to regulate the electrochemical performance of the positive electrode.

The secondary battery fabricated as mentioned above was charged and discharged and the charge and discharge efficiency and the discharge energy density were obtained. The charging was performed until the battery voltage reached 4.2V with a constant current having a current density of 0.52 mA/cm². The discharging was performed until the battery voltage reached 3.0V with a constant current having the same current density of 0.52 mA/cm². The charging and discharging was carried out at room temperature (23 ° C). The charge and discharge efficiency (the ratio of the discharge capacity to the charge capacity) was calculated by obtaining the charge capacity and the discharge capacity from the result of charging and discharging. The discharge energy density was derived by forming a discharge curve, although not shown, by setting the potential on the vertical axis and setting the discharge capacity on the lateral axis from the result of charging and discharging and by integrating the discharge curve. Table 1 shows the result. As understood from Table 1, the secondary battery achieved high charge and discharge efficiency of 94% and high discharge energy density of 790 mWh/g.

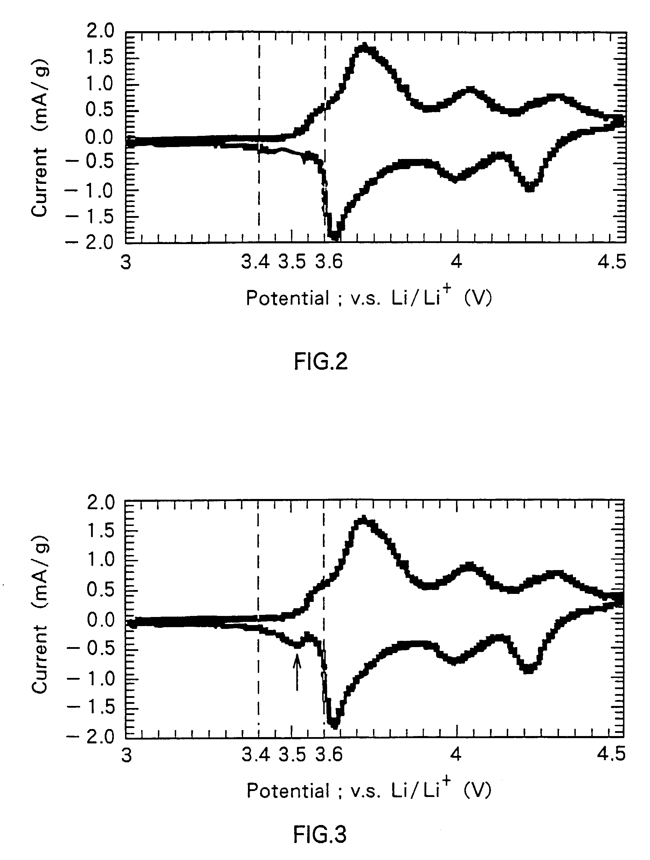

The cyclic voltamgram of the fabricated secondary battery was measured. In the event of measurement, the secondary battery was charged until the battery voltage became 4.5V at a scanning speed of 0.01 mV/sec. Then, the secondary battery was discharged until the battery voltage became 3.0V at the same scanning speed of 0.01 mV/sec. That is, the positive electrode was oxidized until the potential became 4.5V at the scanning speed of 0.01 mV/sec with the lithium metal potential used as a reference. Then, the positive electrode was reduced until the potential became 3.0V at the same scanning speed of 0.01 mV/sec. The measurement was performed at room temperature (23 ° C). Fig. 2 shows the obtained cyclic voltamgram. As understood from Fig. 2, no current peak of the reduction wave was found in a range where the potential is larger than 3.4V and smaller than 3.6V with the lithium metal potential used as a reference.

As Comparative Example 1 with regard to Example 1, a positive electrode material containing mainly a lithium nickel composite oxide was prepared by the same parameters as those of Example 1 except that the mixture of lithium hydroxide hydrate and nickel oxide was heated at 750 ° C in pure oxygen gas currents. The composition of the obtained lithium nickel composite oxide was analyzed by powder X-ray diffraction in a manner similar to Example 1. The result is shown in Table 1. As understood from Table 1, the mole ratio between lithium and nickel was Li:Ni = 1.00 : 1.00. It was found that the lithium nickel composite oxide does not have the non-stoichiometric mole ratio between lithium and nickel and that the mole ratio Ni/Li is equal to 1.0 as the stoichiometric composition.

After preparing a secondary battery in a manner similar to Example 1 by using the obtained positive electrode material, the charge and discharge efficiency and the discharge energy density were obtained in a manner similar to Example 1. Also, the cyclic voltamgram was measured. The obtained charge and discharge efficiency and the discharge energy density are shown in Table 1 and the cyclic voltamgram is shown in Fig. 3. As understood from Table 1, the charge and discharge efficiency was 81% and the discharge energy density was 740 mWh/g, which were both lower than those of Example 1. The reason why the discharge energy density is lower than that of Example 1 is mainly because of the low charge and discharge efficiency. As shown by the arrow in Fig. 3, a current peak of the reduction wave was found in the neighborhood of the potential of 3.5V with the lithium metal potential used as a reference.

Further, as Comparative Example 2 with regard to Example 1, a positive electrode material containing a lithium nickel composite oxide was prepared under the same parameters as those of Example 1 except that the mixture of lithium hydroxide hydrate and nickel oxide was heated at 850 ° C in pure oxygen gas currents. The composition of the obtained lithium nickel composite oxide was analyzed by powder X-ray diffraction in a manner similar to Example 1. The result is shown in Table 1. As understood from Table 1, the mole ratio between lithium and nickel was Li:Ni = 0.89 : 1.11. It was found that the lithium nickel composite oxide has the non-stoichiometric mole ratio between lithium and nickel and that the mole ratio Ni/Li is equal to or larger than 1.1 / 0.9.

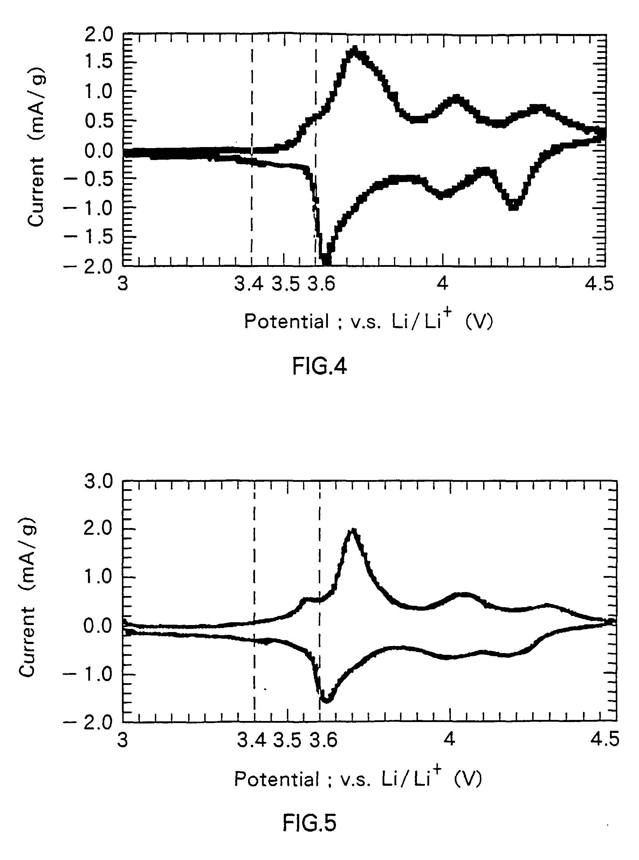

After preparing a secondary battery in a manner similar to Example 1 by using the obtained positive electrode material, the charge and discharge efficiency and the discharge energy density were obtained in a manner similar to Example 1. Also, the cyclic voltamgram was measured. The obtained charge and discharge efficiency and the discharge energy density are shown in Table 1 and the cyclic voltamgram is shown in Fig. 4. As understood from Table 1, although the charge and discharge efficiency was as sufficiently high as 92%, the discharge energy density was as low as 456 mWh/g. No current peak of the reduction wave was found in a range where the potential is larger than 3.4V and smaller than 3.6V with the lithium metal potential used as a reference.

From the results above, it was found that the charge and discharge efficiency of the secondary battery can be increased by using the positive electrode containing the lithium nickel composite oxide which has a characteristic that the reduction wave obtained by cyclic voltammetry does not have a current peak in a range where the potential is larger than 3.4V and smaller than 3.6V with the lithium metal potential used as a reference. It was also found that the charge and discharge efficiency can be increased with respect to the lithium nickel composite oxide having the mole ratio Ni/Li larger than 1. Further, it was also found that the discharge energy density of a secondary battery can be made high by using the positive electrode containing the lithium nickel composite oxide having the mole ratio Ni/Li smaller than 1.1/0.9.

### Example 2

In the example, lithium hydroxide hydrate of purity higher than 99.0%, nickel oxide of purity higher than 99.5% and cobalt oxide of purity higher than 99.0% were prepared and mixed so that the mole ratio of lithium, nickel, and cobalt became Li:Ni:Co = 1.0 : 0.9 : 0.1. The mixture was then heated at 900 ° C in the same atmosphere as that of Example 1. Thereby, black powders containing mainly a lithium nickel cobalt composite oxide were obtained as a positive electrode material.

The composition of the obtained lithium nickel cobalt composite oxide was analyzed by powder X-ray diffraction in a manner similar to Example 1. The result is shown in Table 2. As understood from Table 2, the mole ratio of lithium, nickel and cobalt was Li:Ni:Co = 1.00 : 0.90 : 0.10. It was not found that the mole ratio Li:(Ni+Co) of lithium to both nickel and cobalt in the lithium nickel cobalt composite oxide was non-stoichiometric.

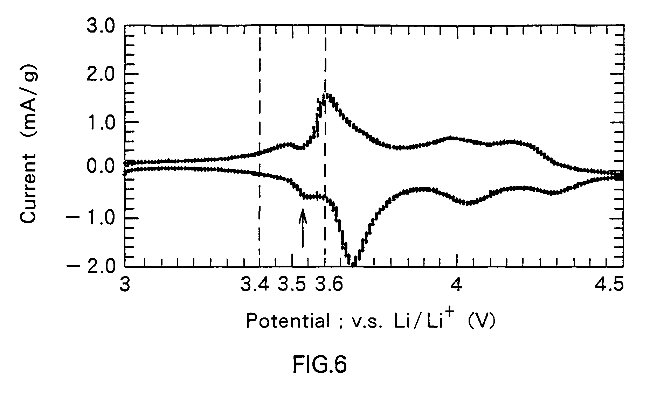

After preparing a secondary battery by using the obtained positive electrode material in a manner similar to Example 1, the charge and discharge efficiency and the discharge energy density were obtained in a manner similar to Example 1. Also, the cyclic voltamgram was measured. The obtained charge and discharge efficiency and the discharge energy density are shown in Table 2 and the cyclic voltamgram is shown in Fig. 5. As understood from Table 2, the secondary battery realizes the high charge and discharge efficiency of 93% and the high discharge energy density of 770 mWh/g. The discharge energy density is lower as compared with Example 1 since the whole capacity decreases due to the solid solution of cobalt. No current peak of the reduction wave was found in a range where the potential is larger than 3.4V and smaller than 3.6V with the lithium metal potential used as a reference.

As Comparative Example 3 with regard to Example 2, a positive electrode material containing the lithium nickel cobalt composite oxide was prepared with the same parameters as those of Example 2 except that the mixture of lithium hydroxide hydrate, nickel oxide and cobalt oxide was heated at 750 ° C. The composition of the obtained lithium nickel cobalt composite oxide was analyzed by powder X-ray diffraction in a manner similar to Example 2. The result is shown in Table 2. The mole ratio of lithium, nickel and cobalt was Li:Ni:Co = 1.00 : 0.90 : 0.10. In a manner similar to Example 2, it was not found that the mole ratio of lithium to both nickel and cobalt (Li:(Ni+Co)) was non-stoichiometric.

**Table 2**

| | Mole ratio of Li, Ni and Co Li : Ni : Co | Charge and discharge efficiency (%) | Discharge energy density (mWh/g) |
|---|---|---|---|
| Example 2 | 1.00 : 0.90 : 0.10 | 93 | 770 |
| Comparative Example 3 | 1.00 : 0.90 : 0.10 | 88 | 720 |

After preparing a secondary battery in a manner similar to Example 1 by using the obtained positive electrode material, the charge and discharge efficiency and the discharge energy density were obtained in a manner similar to Example 2. Also, the cyclic voltamgram was measured. The obtained charge and discharge efficiency and the discharge energy density are shown in Table 2 and the cyclic voltamgram is shown in Fig. 6. As understood from Table 2, the charge and discharge efficiency was 88% and the discharge energy density was 720 mWh/g, which were both lower than those of Example 2. The reason why the discharge energy density is lower than that of Example 2 is mainly because of the low charge and discharge efficiency. As shown by the arrow in Fig. 6, a current peak of the reduction wave was found in the neighborhood of the potential of 3.5V with the lithium metal potential used as a reference.

From the results above, it was found that the charge and discharge efficiency of the secondary battery can be increased and the discharge energy density can be also made high by using the positive electrode containing the lithium nickel cobalt composite oxide having the mole ratio between nickel and cobalt is Ni:Co = 0.9 : 0.1, which has a characteristic that the reduction wave obtained by cyclic voltammetry does not have a current peak in a range where the potential is larger than 3.4V and smaller than 3.6V with the lithium metal potential used as a reference.

Although the invention has been described with regard to the foregoing embodiments and examples, the invention is not limited to the embodiments and examples but can be variously modified. For example, the positive electrode material of the invention may contain, in addition to the lithium nickel composite oxide or lithium nickel cobalt composite oxide described in the embodiments and examples, for instance, a small amount of impurity which does not react completely at the time of manufacture.

In the examples, the positive electrode materials of the invention were prepared at heating temperatures different from those of the comparative examples. However, the positive electrode material of the invention is not limited by producing processes. Even if the positive electrode material is produced by another producing process, the effects of the invention can be obtained so long as the positive electrode contains the lithium nickel composite oxide or lithium nickel cobalt composite oxide described in the examples.

Although the case of using the positive electrode material of the invention for a coin-type secondary battery has been described in the embodiments and examples, the invention can be similarly applied to secondary batteries of other shapes such as button, paper, square and cylinder-shape having a spiral structure. In the case of producing a secondary battery of a square or cylinder shape, the positive electrode can be prepared as follows. For example, a positive electrode mixture in a paste state is prepared by adding a solvent such as formamide or N-methylpyrrolidone to the positive electrode material of the invention, a conductive agent and a binder, and then the positive electrode mixture is applied to a positive electrode collector and dried. The negative electrode can be prepared as follows in a manner similar to the positive electrode. A negative electrode mixture in a paste state is prepared by adding a solvent to a carbonaceous material and a binder. The negative electrode mixture is applied to a negative electrode collector and dried.

In addition, although the secondary battery using a liquid electrolyte as a liquid type electrolyte has been described in the above-mentioned embodiments and examples, a solid electrolyte or gel electrolyte in which lithium salt is dissolved may be used in place of a liquid electrolyte. One of solid electrolytes is obtained by dissolving or dispersing lithium salt in an ion conductive polymer. One of gel electrolytes is obtained by holding a liquid electrolyte by a polymer. Electrolytes of other compositions may be also used so long as an electrolyte has ion conductivity by means of lithium ions.

Further, although the case of forming the positive electrode by using the positive electrode material according to the first or second embodiment as a positive electrode active material has been described in the embodiments and examples, the positive electrode may be also formed by using both of the positive electrode materials according to the first and second embodiments. The positive electrode may be also formed by using both the positive electrode material of the invention and a lithium compound as another positive electrode active material.

In addition, the case of using the positive electrode material of the invention for a secondary battery has been described in the embodiments and examples, the invention can be similarly applied to other batteries such as a primary battery.

As described above, according to the invention, the positive electrode material contains the composite oxide of lithium and nickel, The composite oxide has a characteristic that the reduction wave in the current-potential curve obtained by cyclic voltammetry does not have a current peak in a range where a potential is larger than 3.4V and smaller than 3.6V with a lithium metal potential used as a reference. By forming the positive electrode of a secondary battery by using the positive electrode material, a secondary battery having high charge and discharge efficiency can be obtained.

According to the invention, the positive electrode material contains the composite oxide of lithium, nickel and cobalt, having the mole ratio Co/(Ni+Co) smaller than 0.15. The composite oxide has a characteristic that a reduction wave in a current-potential curve obtained by cyclic voltammetry does not have a current peak in a range where a potential is larger than 3.4V and smaller than 3.6V with the lithium metal potential used as a reference. By forming the positive electrode of a secondary battery by using the positive electrode material, a secondary battery having high charge and discharge capacity and high charge and discharge efficiency can be obtained.

Further, according to the invention, the positive electrode material contains the composite oxide of lithium and nickel, having the mole ratio Ni/Li larger than 1.0. By forming the positive electrode of a secondary battery by using the positive electrode material, a secondary battery having high charge and discharge efficiency can be obtained.

According to one aspect of the invention, the positive electrode material contains the composite oxide of lithium and nickel, having the mole ratio Ni/Li smaller than 1.1/0.9. Thus, the capacity of the positive electrode can be increased.

In addition, according to the secondary battery of the invention, the positive electrode contains a composite oxide similar to the positive electrode material of the invention. Therefore, high charge and discharge efficiency can be obtained.

Obviously many modifications and variations of the present invention are possible in the light of the above teachings. It is therefore to be understood that within the scope of the appended claims the invention may be practiced other wise than as specifically described.

## Claims

1. A positive electrode material containing a composite oxide of lithium (Li) and nickel (Ni),
wherein the composite oxide has a characteristic that a reduction wave in a current-potential curve obtained by cyclic voltammetry does not have a current peak in a range where a potential is larger than 3.4V and smaller than 3.6V with a lithium metal potential used as a reference.

2. A positive electrode material according to claim 1, wherein the composite oxide has a mole ratio of nickel to lithium (Ni/Li) larger than 1.0.

3. A positive electrode material according to claim 2, wherein the composite oxide has the mole ratio of nickel to lithium (Ni/Li) smaller than 1.1/0.9.

4. A positive electrode material containing a composite oxide of lithium (Li), nickel (Ni) and cobalt (Co), the composite oxide having a mole ratio of cobalt to both nickel and cobalt (Co/(Ni+Co)) larger than 0.0 and smaller than 0.15,
wherein the composite oxide has a characteristic that a reduction wave in a current-potential curve obtained by cyclic voltammetry does not have a current peak in a range where a potential is larger than 3.4V and smaller than 3.6V with the lithium metal potential used as a reference.

5. A positive electrode material according to claim 4, wherein the composite oxide has a mole ratio of cobalt to both nickel and cobalt (Co/(Ni+Co)) of 0.1.

6. A positive electrode material containing a composite oxide of lithium (Li) and nickel (Ni),
wherein the composite oxide has a mole ratio of nickel to lithium (Ni/Li) larger than 1.0.

7. A positive electrode material according to claim 6, wherein the composite oxide has the mole ratio of nickel to lithium (Ni/Li) smaller than 1.1/0.9.

8. A secondary battery comprising a positive electrode and a negative electrode, and an electrolyte, the positive electrode containing a composite oxide of lithium (Li) and nickel (Ni),
wherein the composite oxide has a characteristic that a reduction wave in a current-potential curve obtained by cyclic voltammetry does not have a current peak in a range where a potential is larger than 3.4V and smaller than 3.6V with a lithium metal potential used as a reference.

9. A secondary battery comprising a positive electrode and a negative electrode, and an electrolyte, the positive electrode containing a composite oxide of lithium (Li), nickel (Ni) and cobalt (Co),
wherein the composite oxide has a mole ratio of cobalt to both nickel and cobalt (Co/(Ni+Co)) larger than 0.0 and smaller than 0.15, the composite oxide having a characteristic that a reduction wave in a current-potential curve obtained by cyclic voltammetry does not have a current peak in a range where a potential is larger than 3.4V and smaller than 3.6V with a lithium metal potential used as a reference.

10. A secondary battery comprising a positive electrode and a negative electrode, and an electrolyte, the positive electrode containing a composite oxide of lithium (Li) and nickel (Ni),
wherein the composite oxide has a mole ratio of nickel to lithium (Ni/Li) larger than 1.0.
